(19) Europäisches Patentamt
European Patent Office
Office européen des brevets

(11) EP 0 591 651 B1

(12) EUROPÄISCHE PATENTSCHRIFT

(45) Veröffentlichungstag und Bekanntmachung des Hinweises auf die Patenterteilung:
**30.10.1996 Patentblatt 1996/44**

(51) Int Cl.$^{6}$: **G01S 13/90**

(21) Anmeldenummer: **93112940.7**

(22) Anmeldetag: **12.08.1993**

(54) **Radargerät mit synthetischer Apertur auf der Basis rotierender Antennen**

Synthetic aperture radar based on rotating antennae

Radar à ouverture synthétique à base d'antennes tourmantes

(84) Benannte Vertragsstaaten:
**DE FR GB IT NL SE**

(30) Priorität: **05.10.1992 DE 4233415**

(43) Veröffentlichungstag der Anmeldung:
**13.04.1994 Patentblatt 1994/15**

(73) Patentinhaber: **Daimler-Benz Aerospace Aktiengesellschaft**
**81663 München (DE)**

(72) Erfinder: **Klausing, Helmut, Dipl.-Ing. Dr.**
**D-83043 Bad Aibling (DE)**

(56) Entgegenhaltungen:

- **FREQUENZ, Band 45, Nrn. 1/2, Januar/Februar 1991, BERLIN, DE; H. KLAUSING: "Realisierbarkeit eines Radars mit synthetischer Apertur durch rotierende Antennen (Teil I)", Seiten 51-58**
- **FREQUENZ, Band 45, Nrn. 3/4, März/April 1991, BERLIN, DE; H. KLAUSING: "Realisierbarkeit eines Radars mit synthetischer Apertur durch rotierende Antennen (Teil II)", Seiten 73-80**
- **FREQUENZ, Band 45, Nrn. 5/6, Mai/Juni 1991, BERLIN, DE; H. KLAUSING:"Realisierbarkeit eines Radars mit synthetischer Apertur durch rotierende Antennen (Teil III)", Seiten 147-154**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 591 651 B1

Printed by Jouve, 75001 PARIS (FR)

## Beschreibung

In der DE-PS 39 22 086 (entspricht der EP-A-0 406 522) ist ein Radargerät mit synthetischer Apertur auf der Basis rotierender Antennen (ROSAR-Gerät) bekannt, welches einen Sender und einen Empfänger aufweist, deren zumindest eine Antenne zum Senden und Empfangen von Radarimpulsen am Ende eines rotierenden Armes, z.B. eines Hubschrauberrotors oder eines Drehkreuzes oberhalb der Rotorachse, angeordnet ist. Die Empfangssignale werden demoduliert und zwischengespeichert und anschließend mit Referenzfunktionen korreliert. Diese Referenzfunktionen werden jeweils in Abhängigkeit von der Beleuchtungsgeometrie des Radargerätes errechnet bzw. vorgegeben. Parameter für diese Berechnung bzw. Vorgabe sind die zu vermessenden Entfernungsintervalle, die Sendefrequenz, die Länge des rotierenden Armes, der Drehwinkelbereich der Antenne aus dem Signale rückempfangen werden, die Anzahl der Sendeimpulse sowie die Höhe der rotierenden Antenne über Grund. Das Korrelationsergebnis wird in geeigneter Weise, z.B. auf einem Monitor, angezeigt. Ein derartiges Radargerät kann in Echtzeitnähe im On-line-Betrieb eingesetzt und somit etwa neben der Karthographie und der Hinderniswarnung auch der Zielaufklärung und der Zielverfolgung dienen. Der Prozessor dieses bekannten ROSAR-Gerätes weist mehrere Bausteine auf, um die vielfältigen und komplexen Rechenaufgaben zu unterteilen und dadurch die Echtzeitnähe bzw. den On-Line-Betrieb zu ermöglichen.

Bei diesem bekannten Gerät wird das Ergebnis für jedes Entfernungsintervall stets durch Korrelation des Empfangssignales mit einer für dieses Entfernungsintervall gültigen Referenzfunktion erhalten. Es werden in der Patentschrift bereits Lösungen vorgeschlagen, diese Referenzfunktionen zu vereinfachen. Dies gilt für bestimmte Bedingungen, nämlich wenn die Zielentfernung entweder wesentlich größer als die Höhe der Antenne über Grund und ebenfalls wesentlich größer als die Länge des die Antenne tragenden Rotorarmes oder zumindest wesentlich größer als die Länge des Rotorarmes ist. In allen anderen Fällen wird eine vollständige Lösung der Korrelation errechnet.

Trotz dieser Vereinfachung verbleibt ein erheblicher Rechenaufwand, der eine extreme Koordination der Rechenvorgänge voraussetzt.

Der Erfindung liegt die Aufgabe zugrunde, die Rechenarbeit für die Korrelation weiter zu vereinfachen und zu verringern, wobei dadurch die Einsatzmöglichkeit und das Auflösungsvermögen des Radargerätes nicht wesentlich beeinträchtigt werden soll. Diese Aufgabe ist gemäß der Erfindung durch die im kennzeichnenden Teil des Patentanspruches 1 angegebenen Merkmale gelöst.

Demgemäß wird für bestimmte Bereiche die Korrelation mit vereinfachten Referenzfunktionen vorgenommen, wobei das mit der Erfindung vorgeschlagene Verfahren sozusagen als unfokussierte Signalverarbeitung bezeichnet werden kann. Die Korrelation der Empfangssignale mit der zugehörigen Referenzfunktion entspricht im Grunde einer Fokussierung, weil hier die vollständige Kompensation des kosinusförmigen Phasenverlaufes erfolgt und damit alle Empfangsechos entlang der synthetischen Apertur phasengleich zum Empfangssignal aufaddiert werden. Dieser Vorgang liefert die beste mögliche Auflösung, hat jedoch den Nachteil des erwähnten hohen Rechenaufwandes hinsichtlich der Korrelation.

Bei der unfokussierten Signalverarbeitung wird nur der Hauptteil des Empfangssignales berücksichtigt, bei dem die Phasenänderung kleiner als $\pi/2$ für den Hin- und Rückweg des Signallaufes liegt. Dies entspricht dann einem Phasenfehler von $\pi/4$ für den Einweg-Fall, entsprechend einer Wegdifferenz von $\lambda/8$. Solange diese Bedingung erfüllt ist, braucht nach der Fernfeld-Bedingung keine Korrektur vorgenommen zu werden. Es verschlechtert sich zwar die Lateralauflösung infolge der Integration über eine kleinere synthetische Aperturlänge, die jedoch für bestimmte Bedingungen hinnehmbar ist. Der Vorteil liegt in einer Vereinfachung der Referenzfunktion und der Signalverarbeitung.

Bei einem ROSAR-Gerät wird, wie bei einem Gerät mit linear bewegter Antenne, für den Hin- und Rückweg ein maximaler Phasenfehler von 90°, d.h. $\pi/2$ bzw. $\lambda/4$ bei einem Drehwinkel der Antenne von $\alpha = \alpha_{max}$ zugelassen, entsprechend einem Wert von $\pi/4$ bzw. $\lambda/8$ für den einfachen Weg. Bei der unfokussierten Signalverarbeitung wird nicht mit der vollständigen Referenzfunktion $S_R(t)$, sondern nur mit einer Fensterfunktion

$$S_r(t) = I_r(t)+j\cdot Q_r(t) \qquad (1)$$

korreliert, deren Breite dem Hauptteil des Empfangssignales $S_E(t)$ innerhalb der oben genannten Grenzen für den Phasenwinkel von 90° für den Hin- und Rückweg entspricht. Innerhalb dieser Breite erfolgt damit eine Addition des Empfangsignals ohne Phasenkorrektur. Die Korrelation des Empfangssignales mit der Fensterfunktion entspricht einer Addition der Empfangsechos über der Antennenlänge beim Radar mit realer Apertur. Außerhalb dieses Intervalles erfolgt eine starke Dämpfung. Die Fensterbreite, d.h. die zur Beleuchtung gehörende Integrationszeit bzw. der zulässige Drehwinkelbereich für die unfokussierte Signalverarbeitung, muß dem Empfangssignal für jedes Entfernungsintervall angepaßt werden und ist für die Inphase- und Quadraturkomponente gleich groß und hat die gleiche Form. Für diese Komponenten $I_r(t)$ bzw. $Q_r(t)$ gilt während der Integrationszeit $T_s = 2\cdot t_{max}$:

$$I_r(t) = Q_r(t) = r(t) \qquad \text{mit } -t_{max} \le t \le t_{max}. \tag{2}$$

Die Fensterfunktion *r(t)* kann als Übertragungsfunktion des Filters auf den Energieinhalt Eins normiert werden. Mit dem Normierungsfaktor *K* gilt dann:

$$r(t) = \begin{cases} K & \text{für} \quad -t_{max} \le t \le +t_{max} \\ 0 & \text{sonst.} \end{cases} \tag{3}$$

Die Normierung muß nicht unbedingt durchgeführt werden. Sie kann entfallen, wenn nur die Detektion von Zielen, d.h. das Korrelationsergebnis, eine Rolle spielt. Für den zur Fensterbreite zugehörigen Drehwinkel α folgt mit $\alpha_{max} = \omega_o \cdot t_{max}$; vgl. Fig. 1:

$$-\alpha_{max} \le \alpha \le +\alpha_{max}. \tag{4}$$

Der maximale Drehwinkel legt somit die Grenze der unfokussierten Signalverarbeitung fest, da dort der Phasenfehler gerade noch den erlaubten Wert annimmt.

Für die Fensterfunktion *r(α)* als Funktion des Drehwinkels α folgt mit der Winkelverschiebung

$$\Delta\alpha = \omega_o \cdot \Delta t = \frac{\omega_o}{f_p}:$$

$$r(\alpha) = \mathrm{rect}\left(\frac{\Delta\alpha}{2 \cdot \alpha_{max}}\right). \tag{5}$$

Die Ungleichung zur Berechnung des maximalen Drehwinkels $\alpha_{max}$, für den die unfokussierte Signalverarbeitung noch gültig ist, lautet

$$R_n(t) \le R_{SOn} + \frac{\lambda}{8} \tag{6}$$

*(n:* Nummer des jeweilgen Entfernungsintervalles),
wobei $R_n(t)$ die Zielentfernung in Abhängigkeit von der Zeit *t*, $R_{SOn}$ die Entfernung zwischen der Antenne und der Mittellinie des ausgeleuchteten Entfernungsintervalles im Zielgebiet und λ wiederum die Wellenlänge ist. Ist der beleuchtete Streifen in N Entfernungsintervalle aufgeteilt, so gibt der Index *n* die Nummer des jeweiligen Entfernungsintervalles in Abhängigkeit der Radialauflösung an ($1 \le n \le N$). Setzt man die Beziehung für die Schrägentfernungen $R_n(t)$ und die kürzeste Entfernung zum Ziel $R_{SOn}$ ein, so erhält man mit

$$R_n(t) = \sqrt{L^2 + R_{gn}^2 - 2 \cdot L \cdot R_{gn} \cdot \cos\alpha_n + H_o^2} \tag{6a}$$

und

$$R_{SOn} = \sqrt{(R_{gn} - L)^2 + H_o^2} \tag{6b}$$

dann folgende Ungleichung:

$$\sqrt{L^2 + R_{gn}^2 - 2 \cdot L \cdot R_{gn} \cdot \cos \alpha_n + H_o^2} \leq \sqrt{(R_{gn} - L)^2 + H_o^2} + \frac{\lambda}{8}. \quad (7)$$

Anhand der in der obigen Patentschrift angegebenen Formeln und der geometrischen Betrachtungen der Beleuchtungsgeometrie ergibt sich aus der Umwandlung der obigen Ungleichung (6) bzw. (7) in eine Gleichung der maximal für die unfokussierte Signalverarbeitung zulässige Drehwinkel $\alpha_{nmax}$ für jedes Entfernungsintervall $n$ zu

$$\alpha_{nmax} = \mathrm{Arccos}\left[1 - \left(\frac{\sqrt{(R_{gn} - L)^2 + H_o^2}}{L \cdot R_{gn}} \cdot \frac{\lambda}{8} + \frac{\lambda^2}{128 \cdot L \cdot R_{gn}}\right)\right]. \quad (8a)$$

Für Entfernungen zum Ziel, die groß gegen die Rotorlänge $L$ sind, d.h. $R_{gn} >> L$ gilt:

$$\tilde{\alpha}_{nmax} = \mathrm{Arccos}\left[1 - \frac{\lambda}{8 \cdot L} \cdot \left(\sqrt{1 + \left(\frac{H_o}{R_{gn}}\right)^2}\right)\right]. \quad (8b)$$

Für Entfernungen zum Ziel, die groß gegen die Rotorlänge $L$ und Höhe $H_o$ sind, d.h. $R_{gn} >> L$ und gleichzeitig $R_{gn} >> H_o$ folgt

$$\bar{\alpha}_{nmax} = \mathrm{Arccos}\left[1 - \frac{\lambda}{8 \cdot L}\right]. \quad (8c)$$

Für $R_{gn} >> L$ und gleichzeitig $R_{gn} >> H_o$ ist der maximale Drehwinkelbereich $\bar{\alpha}_{nmax}$ unabhängig von der Entfernungsgeometrie und die Fensterfunktion braucht deshalb nicht mehr in radialer Richtung angepaßt zu werden. Dies ermöglicht eine sehr schnelle Signalverarbeitung.

Die zu dem maximalen Drehwinkel gehörende synthetische Aperturlänge $S_{nmax}$ errechnet sich aus der Gleichung (8) für den unfokussierten Fall zu

$$S_{nmax} = 2 \cdot \alpha_{nmax} \cdot L. \quad (9a)$$

Für $R_{gn} >> L$ gilt:

$$\tilde{S}_{nmax} = 2 \cdot \tilde{\alpha}_{nmax} \cdot L. \quad (9b)$$

Für $R_{gn} >> L$ und gleichzeitig $R_{gn} >> H_o$ gilt:

$$\bar{S}_{nmax} = 2 \cdot \bar{\alpha}_{nmax} \cdot L. \quad (9c)$$

In Fig. 2 ist der Verlauf des maximal zulässigen Drehwinkels $\alpha_{max}$ als Funktion der Entfernung $R_g$ zum Zielobjekt für verschiedene Höhen $H_o$ der Antenne über Grund für eine Wellenlänge von 0.23 m und eine Länge L des Rotorarmes von 6 m dargestellt. Man sieht, daß insbesondere für größere Einsatzhöhen $H_o$ der Drehwinkelbereich, in dem eine unfokussierte Signalverarbeitung ohne größeren Verlust an Auflösung möglich ist, recht erheblich ist. Die gestrichelte Linie zeigt den Verlauf des maximalen Drehwinkels $\bar{\alpha}_{nmax}$ nach Gleichung (8c) mit $\bar{\alpha}_{nmax}$ = 5.6°, der sich bei dieser Beleuchtungsgeometrie ab einer Entfernung von ungefähr 500 m nur noch geringfügig ändert.

In Fig. 3 wird außer dem maximal zulässigen Drehwinkel $\alpha_{max}$ der Antenne zusätzlich der Verlauf des maximalen Drehwinkels $\alpha_s/2$ des Empfangssignals als Funktion des Öffnungswinkels $\gamma$ der verwendeten Antenne und der Zielentfernung $R_g$ gezeigt, und zwar als gestrichelte Kurvenschar. Im Nahbereich ist der von der Einsatzhöhe $H_o$ abhängige Winkel $\alpha_{max}$ größer als der von dem Öffnungswinkel $\gamma$ abhängige maximale Drehwinkel $\alpha_s/2$. Dies bedeutet, daß hier die Fensterlänge für die unfokussierte Signalverarbeitung größer als die Länge des Empfangssignales ist. In diesem Bereich ist jedoch die Radialauflösung am Boden sehr schlecht, weshalb der für eine unfokussierte Signalverarbeitung eigentlich interessante Bereich dann gegeben ist, wenn der maximale Drehwinkel $\alpha_s/2$ größer als der Winkel $\alpha_{max}$ wird. Insbesondere kann die unfokussierte Signalverarbeitung bei hohen Frequenzen z.B. oberhalb von 35 GHz, d.h. im Bereich der Millimeterwellen, angewandt werden. Bei diesen hohen Frequenzen ist außerdem der Vorteil geringer Antennenabmessungen gegeben, d.h., daß derartige Antennen auf einem Hubschrauber z.B. auf einem kleinen separaten Drehkreuz oberhalb der Rotorachse mit einer Rotorlänge von ca. 1 m angeordnet werden können.

Für die gegebenen Abschätzungen des maximalen Drehwinkels $\alpha_{nmax}$ für $R_{gn} >> L$ bzw. $R_{gn} >> L$ und gleichzeitig $R_{gn} >> H_o$ kann die Lateralauflösung $\Delta x$ abgeschätzt werden. Dazu wird die kreisbogenförmige synthetische Aperturlänge S durch die Sehne ersetzt und der Antennenweg innerhalb dieses kleinen Drehwinkelbereiches als linear angesehen. Mit $S_{nmax} = 2 \cdot \alpha_{nmax} \cdot L$ gilt allgemein für die Lateralauflösung $\Delta x$ als Funktion des jeweiligen Entfernungsintervalles mit dem Index $n$:

$$\Delta x_n = \frac{\lambda}{2 \cdot S_{nmax}} \cdot R_{gn} = \frac{\lambda}{4 \cdot \alpha_{nmax} \cdot L} \cdot R_{gn} \qquad (10a)$$

Für $R_{gn} >> L$ gilt:

$$\bar{\Delta x}_n = \frac{\lambda}{4 \cdot \bar{\alpha}_{nmax} \cdot L} \cdot R_{gn}. \qquad (10b)$$

Für $R_{gn} >> L$ und gleichzeitig $R_{gn} >> H_o$ gilt:

$$\bar{\bar{\Delta x}}_n = \frac{\lambda}{4 \cdot \bar{\bar{\alpha}}_{nmax} \cdot L} \cdot R_{gn}. \qquad (10c)$$

Aus der Tatsache, daß die maximale synthetische Aperturlänge auf den Halbkreis der Rotorblattebene begrenzt ist und nicht, wie bei der linearen Antennenbewegung, mit wachsender Entfernung zum Objekt ansteigt, folgt, daß der für eine unfokussierte Signalverarbeitung maximal zulässige Drehwinkelbereich ab etwa 500 m einen Grenzwert erreicht und sich dann nur noch geringfügig ändert. Dies bedeutet, daß die Fensterlänge auch für zunehmende Entfernungen konstant bleibt und hat damit den wesentlichen Vorteil, daß die Signalverarbeitung erheblich beschleunigt wird. Bei Entfernungen unter 500 m ist der Drehwinkel abhängig vom Depressionswinkel, d.h. dem Verhältnis von der Höhe der Antenne über Grund zur Entfernung. Je größer diese Höhe ist, d.h. je steiler die Antenne zum Boden gerichtet wird, desto größer wird der Depressionswinkel. Dies hat zur Folge, daß der maximal zulässige Drehwinkelbereich mit größer werdendem Depressionswinkel ebenfalls zunimmt, da, bedingt durch die fast senkrechte Projektion des Entfernungsverlaufes am Boden, die Phasenabweichung proportional dieser Projektion ist. Im Nahbereich besteht dann unter Beachtung der in Fig. 3 gezeigten Randbedingungen ebenfalls die Möglichkeit einer unfokussierten Signalverarbeitung, falls die gewünschte Radialauflösung am Boden ausreicht.

Die Erfindung ist in einem Ausführungsbeispiel anhand der Zeichnung näher erläutert. In der Zeichnung stellen dar:

Fig. 1 Diagramme für die Anteile $I_E$ und $Q_E$ des Empfangssignales und der als Referenzfunktion gewählten Fensterfunktion mit dem Anteil $r$ zur bereits oben erfolgten Erläuterung der unfokussierten Signalverarbeitung;

Fig. 2 den bereits oben erläuterten Verlauf des maximalen Drehwinkels der Antenne;

Fig. 3 das Diagramm gemäß Fig. 2 mit einer überlagerten Kurvenschar hinsichtlich des Verlaufes des maximalen Drehwinkels des Empfangssignales als Funktion des Öffnungswinkels der Antenne $\gamma$,

Fig. 4 ein Blockschaltbild eines Radargerätes gemäß der Erfindung mit einer unfokussierten Signalverarbeitung;

Fig. 5 einen Vergleich der Ergebnisfunktion für fokussierte und unfokussierte Signalverarbeitung.

Fig. 6 ein gegenüber Fig. 4 detailliertes Blockschaltbild wesentlicher Schaltungsbausteine zur unfokussierten Signalverarbeitung.

In Fig. 4 ist ein vereinfachtes Blockschaltdiagramm für den Prozessor eines ROSAR-Gerätes gegeben, wobei zur detaillierten Erklärung auf Fig. 6 und auf die oben genannte DE-PS 39 22 086 verwiesen wird. Der Prozessor weist zwei Kanäle auf, wobei der eine Kanal zur Erzeugung der Referenzfunktionen und der andere Kanal zur Aufbereitung der Empfangssignale dient. Im ersten Kanal ist ein Geometriebaustein 1 vorgesehen, der mit Hilfe der eingegebenen Höhe $H_o$ der Antenne über Grund und weiterer Parameter, insbesondere dem Depressionswinkel, dem Inklinationswinkel und der Länge des Rotorarmes, Parameter berechnet, die für die Referenzfunktionen notwendig sind. Diese Parameter werden einer weiteren Schaltung 2, bestehend aus mehreren Bausteinen, zugeführt, wobei in dieser Schaltung der gesamte Entfernungsbreich des ROSAR-Gerätes in eine Vielzahl von Entfernungsintervallen unterteilt wird. Aufgrund dieser Unterteilung werden dann in einem weiteren Baustein 3 die Referenzfunktionen berechnet, wobei hierbei bereits entsprechend der genannten DE-PS 39 22 086 für die Referenzfunktionen unterschiedliche Bereiche vorgegeben werden, je nachdem, ob die Zielentfernung wesentlich größer als die Höhe der Antenne über Grund bzw. kleiner oder gleich dieser, aber wesentlich größer als die Länge des Rotorarmes ist. Ferner werden in einem weiteren Baustein 4 die oben erwähnten vereinfachten Referenz- bzw. Fensterfunktionen errechnet. Die Bausteine 3 und 4 sind mit einem Speicher 5 für die Referenz- bzw. Fensterfunktionen versehen.

Im zweiten Kanal werden die Empfangssignale $S_E$ einem Quadraturdemodulator 6 zugeführt und hinsichtlich ihrer Inphase- und Quadraturkomponente $I_E$ und $Q_E$ in einer Tastschaltung 7 ausgetastet. Die Komponenten werden in Zwischenspeichern 8 bzw. 9 zwischengespeichert und über einen Speicher 10 synchron mit den entsprechenden Referenz- bzw. Fensterfunktionen einem Korrelator 11 zugeführt. Das Korrelationsergebnis wird in einer Anzeige, z.B. einem Monitor 12, dargestellt und/oder weiter ausgewertet. Hinsichtlich der näheren Funktion wird auf die oben genannte DE-PS 39 22 086 verwiesen.

Mit Hilfe eines Komparatorprozessorbausteines 13 wird die obige Ungleichung (7) und die Gleichung (8) zur Ermittlung des maximalen Drehwinkels, bis zu dem eine unfokussierte Signalverarbeitung möglich ist, berechnet. Zugeführt werden diesem Baustein die in den obigen Gleichungen angegebenen Parameter, die aus dem Geometriebaustein 1 und der Schaltung 2 ermittelt wurden, wobei diese Parameter entsprechend Gleichung (8c) auf die beiden Parameter $L$ und $\lambda$ begrenzt werden können, wenn mit dem Näherungswert gerechnet wird.

Dieser Komparatorprozessorbaustein 13 steuert die beiden Bausteine 3 und 4 für die Referenzfunktionen bzw. Fensterfunktionen an und bestimmt, wann die unfokussierte Signalverarbeitung erfolgen soll. Sowohl die Referenzfunktion als auch die Fensterfunktion können jeweils entsprechend den Ausführungen in einzelnen Bereichen vereinfacht werden.

In Fig. 5 ist die Ergebnisfunktion für eine fokussierte und eine unfokussierte Signalverarbeitung dargestellt, wobei ungünstige Parameter verwendet wurden, nämlich eine Wellenlänge von 0.23 m, eine Rotorblattlänge von 6 m und ein Näherungswert des maximalen Drehwinkels gemäß Gleichung (8c) von 5.6° sowie eine Lateralauflösung von etwa 0.1 mal der Zielentfernung. Hierbei galt gleichzeitig wiederum, daß die Zielentfernung wesentlich größer als die Rotorblattlänge und wesentlich größer als die Höhe der Antenne über Grund ist. Man sieht, daß trotz dieser schlechten Parameter bereits die Ergebnisfunktion deutlich aus dem Hintergrund zu separieren ist und somit das beleuchtete Objekt eindeutig verifiziert werden kann. In Fig. 6 ist ein detailliertes Blockschaltdiagramm für die Korrelation der eintreffenden Signale mit den Fensterfunktionen dargestellt. Der oben erwähnte Baustein 4 zum Bilden der vereinfachten Referenz- bzw. Fensterfunktionen weist eine Winkelberechnungschaltung 41 auf, in der der für die unfokussierte Signalverarbeitung maximal zulässige Drehwinkel $\alpha_{nmax}$ entsprechend der obigen Gleichung (8a) berechnet wird. Eingangssignale für diese Schaltung sind:

$R_{gn}$: der Abstand vom Drehpunkt der Antenne zum Mittelpunkt der jeweiligen Entfernungs- bzw. Auflösungzelle;

$n$: der Laufindex für die einzelnen Entfernungsintervalle;

$\lambda$: die Wellenlänge des Sendesignals;

$L$: die Länge des Rotorblattes bzw. des rotierenden Armes und

$\pi$: die Kreiszahl.

Der berechnete Wert für den zulässigen Drehwinkel, d.h. die Größe des Winkelfensters, innerhalb dessen die unfokussierte Signalverarbeitung zulässig ist, wird einmal einer Fensterzeitberechnungsschaltung 42 und einer Fensterfunktionsberechnungsschaltung 43 zugeführt. In der Fensterzeitberechnungsschaltung wird aus dem Laufindex $n$ und der Kreisfrequenz $\omega_0$ die Integrationszeit $T_{Sun}$ entsprechend der in dem Block 42 in Fig. 6 angegebenen Formel berechnet. In einer Stützstellenberechnungsschaltung 44 wird diese Integrationszeit mit der Pulswiederholfrequenz $f_p$ multipliziert, woraus sich die Anzahl der Stützstellen $Z_S$, d.h. die Anzahl der Sendeimpulse innerhalb des vorgegebenen Fensters bestimmt. Das Fenster des gesamten Drehwinkels wird entsprechend der Stützstellenanzahl unterteilt, so daß an diesen Orten die jeweiligen Korrelationen gebildet werden. Der Ausgangswert $Z_S$ der Stützstellenberechnungsschaltung 44 wird dem Speicher 5 für die Referenz- bzw. Fensterfunktionen und dem Korrelator 11 zugeführt. Zur Berechnung der Fensterfunktionen in der Fensterfunktionsberechnungsschaltung 43 ist diese mit einer Inkrementvorgabeschaltung 45 verbunden, die aus den Werten für die Kreisfrequenz und die Pulswiederholfrequenz das Winkelinkrement $\Delta\alpha$ liefert, d.h. das Winkelinkrement von Stützstelle zu Stützstelle. Der Fensterfunktionsberechnungsschaltung wird außerdem noch der Laufindex $n$ zugeführt. Analog zu der obigen Gleichung (2) werden in der Fensterfunktionsberechnungsschaltung 43 der Inphase- und der Quadraturanteil der Fensterfunktion vorgegeben, wobei diese Funktionen in der Fig. 6 von dem Winkel $\alpha$ und nicht von der Zeit $t$ abhängig angegeben sind, wobei jedoch diese beiden Parameter durch die Kreisfrequenz $\omega_0$ direkt in Verbindung stehen. Die mit einem Dach "^" gekennzeichneten Abtastwerte für die Inphase- und Quadraturkomponente der Fensterfunktionen für die einzelnen Entfernungsintervalle mit dem Laufindex $n$ sind jeweils gleich und werden durch die Rechteckfunktion rect$[\Delta\alpha/(2\cdot\alpha_{max})]$ bestimmt, die für Werte von $\Delta\alpha$ zwischen $-\alpha_{max}$ bis $+\alpha_{max}$ Eins und ansonsten Null ist. Dieses gilt für sämtliche Entfernungsintervalle, d.h. für den Laufindex $n$ zwischen 1 und $N$. Diese Formel ist analog zu der o.a. Gleichung (3), die dort wiederum auf die Zeit als Funktionsparameter bezogen ist. Die Fensterfunktion $\hat{r}_n(\alpha)$ wird dem Speicher 5 zugeführt, dessen Kapazität $K_R$ zumindest dem Produkt aus der maximalen Anzahl der Stützstellen $Z_S$, der Gesamtzahl $N$ der Entfernungsintervalle und der Wortlänge U, d.h. der Anzahl der Bits der Fenstefunktion sein muß.

Auf der Empfangsseite ist zunächst eine Impulszählschaltung 46 vorgesehen, in der die Anzahl $Z_B$ der Sendeimpulse über 360° errechnet werden. Diese Anzahl setzt sich aus dem Produkt der Gesamtintegrationszeit $T_B$ für 360° und der Pulswiederholfrequenz $f_P$ zusammen. Die Anzahl $Z_B$ wird einmal dem Korrelator 11 und zum anderen den Zwischenspeichern 8 und 9 für die Inphase- bzw. Quadraturkomponente des Empfangssignales zugeführt. Die Komponenten $I_e$ und $Q_E$ sind wiederum als analog/digital gewandelte Abtastwerte mit einem Dach "^" in Abhängigkeit des Drehwinkels für die einzelnen Entfernungsintervalle mit dem Laufindex $n$ dargestellt. Die abgetasteten Werte der Inphase- und Quadraturkomponente werden dem Speicher 10 zugeführt, wobei dessen Speicherkapazität mindestens dem Produkt aus der maximalen Anzahl $Z_B$ der Sendeimpulse über 360°, der Anzahl der Entfernungsintervalle und der doppelten Wortlänge, d.h. der doppelten Anzahl der Bits der jeweiligen Komponente entsprechen. Dem Korrelator 11 werden nun getaktet jeweils die mit dem gleichen Laufindex $n$ versehenen Fensterfunktionen und Empfangssignalkomponenten zugeführt und entsprechend den in dem Korrelatorblock 11 angegebenen Formeln korreliert. Die wiederum als Abtastwerte mit einem Dach gekennzeichneten Ergebnisfunktionen $\hat{S}_0$ für die einzelnen Entfernungsintervalle mit dem Laufindex $n$ für den Inphase- bzw. Quadraturanteil/bzw. $Q$ werden in Abhängigkeit des Winkelinkrements $\Delta\alpha$ multipliziert mit einem weiteren Laufindex $m$ zwischen 1 und der Gesamtzahl $Z_B$ der Sendeimpulse angegeben und einer Betragsbildungsschaltung 47 zugeführt, in der der Betrag der abgetasteten Ergebnisfunktion $\hat{S}_{0n}(m\cdot\Delta\alpha)$ gebildet wird. Dieser Betrag, d.h. das reelle Korrelationsergebnis wird dann dem Monitor 12 oder einem weiteren Auswertegerät 48 zugeführt.

## Patentansprüche

1. Radargerät mit zumindest einem Sender und einem Empfänger, denen zumindest eine Antenne zum Senden und Empfangen von Radarimpulsen am Ende eines rotierenden Armes zugeordnet ist, mit einer Einrichtung zum Demodulieren und Zwischenspeichern der Empfangssignale, mit Einrichtungen zum Bilden und Speichern von Referenzfunktionen in Abhängigkeit von der Beleuchtungsgeometrie des Radargerätes, der zu vermessenden Entfernungsintervalle, der Drehwinkelbereiche, der Sendeimpulse sowie der Höhe der rotierenden Antenne über Grund, und mit einem Korrelator zum Korrelieren der Empfangssignale mit den Referenzfunktionen sowie einem Auswerte- und/oder Anzeigegerät für das Korrelationsergebnis, dadurch gekennzeichnet, daß für die Korrelation ausschließlich der Hauptteil des Empfangssignals ($S_E$) verwendet wird, bei dem die Phasenänderung kleiner oder gleich 90° entsprechend $\pi/2$ für den Hin- und Rückweg des ausgesendeten und empfangenen Signales ist, und als Referenzfunktion eine vereinfachte Fensterfunktion ($S_r$; $r$) verwendet wird, deren Breite ebenfalls dem Hauptteil des Empfangssignales entspricht.

2. Radargerät nach Anspruch 1, dadurch gekennzeichnet, daß die Inphase- und Quadraturkomponente ($I_r$, $Q_r$) der Fensterfunktion gleich gewählt sind ($K$; 1).

3. Radargerät nach Anspruch 2, dadurch gekennzeichnet, daß die Inphase- und Quadraturkomponente ($I_r$, $Q_r$) jeweils eine Sprungfunktion ($r$) sind mit einem normierten Wert (K) innerhalb der durch den Hauptteil des Empfangssignales definierten Grenzen und dem Wert 0 außerhalb dieser Grenzen.

4. Radargerät nach einem der vorhergehenden Ansprüche, dadurch gekennzeichnet, daß die Korrelation mit Hilfe der Fensterfunktion innerhalb eines maximalen Drehwinkels ($\alpha_{nmax}$) erfolgt, für den die Ungleichung

$$R_n(t) \leq R_{SOn} + \frac{\lambda}{8}$$

($n$: Nummer des jeweiligen Entfernungsintervalles)
gilt und $R_n(t)$ die Zielentfernung, $R_{SOn}$ die Entfernung zwischen der Antenne und der Mittellinie des von der Antenne ausgeleuchteten Streifens und $\lambda$ die Wellenlänge des Sendesignales ist; ist der beleuchtete Streifen in $N$ Entfernungsintervalle aufgeteilt, so gibt der Index $n$ die Nummer des jeweiligen Entfernungsintervalles in Abhängigkeit der Radialauflösung an ($1 \leq n \leq N$),

5. Radargerät nach Anspruch 4, dadurch gekennzeichnet, daß der maximale Drehwinkel für die einzelnen Entfernungsintervalle berechnet wird zu:

$$\alpha_{nmax} = \mathrm{Arccos}\left[1 - \left(\frac{\sqrt{(R_{gn} - L)^2 + H_o^2}}{L \cdot R_{gn}} \cdot \frac{\lambda}{8} + \frac{\lambda^2}{128 \cdot L \cdot R_{gn}}\right)\right],$$

wobei in der Gleichung bedeuten:
$R_{gn}$ der Abstand vom Drehpunkt der Antenne zum Mittelpunkt des jeweiligen Entfernungsintervalles mit dem Laufindex $n$, $L$ die Länge des die Antenne tragenden rotierenden Armes, $H_0$ die Höhe der Antenne über Grund und $\lambda$ die Wellenlänge des Sendesignales.

6. Radargerät nach einem der vorhergehenden Anprüche, dadurch gekennzeichnet, daß eine Berechnungs- und Vorgabeschaltung (44, 45) vorgesehen ist, mit der der Bereich, in der die Korrelation mit der vereinfachten Fensterfunktion ($S_r(t)$) erfolgt, in Unterbereiche ($Z_s$, $\Delta\alpha$) unterteilt wird und daß an den durch die Unterteilung ermittelten Stützstellen das Empfangssignal abgetastet und mit der jeweiligen Fensterfunktion korreliert wird.

7. Radargerätnach Anspruch 6, dadurch gekennzeichnet, daß die Berechnungschaltung (44, 45) eine Stützstellenberechnungschaltung (44) und eine Inkrementvorgabeschaltung (45) umfaßt, in denen die Anzahl ($Z_s$) und die Lage der Stützstellen bestimmt werden, an denen die Werte für die Fensterfunktionen gebildet und die Empfangssignale abgetastet werden.

8. Radargerät nach einem der vorgehenden Ansprüche, dadurch gekennzeichnet, daß als vereinfachte Fensterfunktion

$$r(t) = \begin{cases} K & \text{für } -t_{max} \leq t \leq +t_{max} \\ 0 & \text{sonst} \end{cases}$$

verwendet wird, wobei $\pm t_{max}$ die dem maximal zulässigen Drehwinkel $\alpha_{max}$ zugeordnete Zeit ist.

## Claims

1. Radar unit comprising at least one transmitter and one receiver with at least one antenna at the end of a rotary arm for transmitting and receiving radar pulses, a device for demodulation and intermediate storage of receive signals, with devices for forming and storing reference functions in dependence on the illumination geometry of the radar unit, distance intervals to be measured, rotary angle ranges, transmit pulses as well as the height above ground of the rotary antenna, and with a correlator for correlating the receive signals with the reference functions as well as an evaluating and/or indicating unit for the correlation result, **characterized in that** for the correlation only the main portion of the receive signal *($S_E$)* is used in which the phase change is less than or equal 90° according to $\pi/2$ for the way out and back of the transmitted and received signal, and as reference function is used a simplified window function ($S_r$; *r)* the width of which also corresponds with the main portion of the receive signal.

2. Radar unit according to Claim 1, **characterized in that** the inphase and quadrature component *($I_r$ $Q_r$)* of the window function are chosen to be identical (K; 1).

3. Radar unit according to Claim 2, **characterized in that** the inphase and quadrature component *($I_r$, $Q_r$)* are a respective jump function (*r*) with a normed value (*K*) within the limits defined by the main portion of the receive signal and a value 0 outside these limits.

4. Radar unit according to one of the above claims, **characterized in that** the correlation is carried out with the aid of the window function within a maximum rotary angle ($\alpha_{n\max}$) to which applies the inequation

$$R_n(t) \leq R_{SOn} + \lambda/8$$

($n$ = number of respective distance interval)
and $R_n(t)$ is the target range, $R_{SOn}$ is the distance between the antenna and the centre line of the strip illuminated by the antenna, and $\lambda$is the wavelength of the transmit signal; if the illuminated strip is divided into $N$ distance intervals, then the index $n$ indicates the number of a respective distance interval in dependence of the radial resolution ($1 \leq n \leq N$).

5. Radar unit according to Claim 4, **characterized in that** the maximum rotary angle for the individual distance intervals is calculated at:

$$\alpha_{n\max} = \mathrm{Arccos}\left[1 - \left(\frac{\sqrt{(R_{gn} - L)^2 + H_o^2}}{L \cdot R_{gn}} \cdot \frac{\lambda}{8} + \frac{\lambda^2}{128 \cdot L \cdot R_{gn}}\right)\right]$$

where in the equation
$R_{gn}$ is the distance between rotary point of the antenna and the centre point of a respective distance interval with an operating index *n, L* is the length of the rotary arm which supports the antenna, $H_o$ is the height above ground of the antenna, and $\lambda$ is the wavelength of the transmit signal.

6. Radar unit according to one of the above Claims, **characterized in that** a calculating and advance circuit (44, 45) is provided which divides the area in which the correlation is carried out with the simplified window function ($S_r(t)$) into sub regions ($Z_s$, $\Delta\alpha$), and that the receive signal is scanned at the support points determined by the division and correlated with the respective window function.

7. Radar unit according to Claim 6, **characterized in that** the calculating circuit (44, 45) includes a support-point calculating circuit (44) and an increment advance circuit (45) in which are determined the number ($Z_s$) and position of the support points where the values for the window functions are established and the receive signals are scanned.

8. Radar unit according to one of the above claims, **characterized in** that the following is used as a simplified window function, where $\pm t_{max}$ is the time associated with the maximum admissible rotary angle $\alpha_{max}$:

$$r(t) = \begin{cases} K & \text{for} \quad -t_{max} \leq t \leq +t_{max} \\ 0 & \text{otherwise} \end{cases}$$

## Revendications

1. Appareil radar comprenant au moins un émetteur et un récepteur auquel est associée au moins une antenne d'émission et de réception d'impulsions radar à l'extrémité d'un bras rotatif, un dispositif pour la démodulation et la mémorisation intermédiaire des signaux de réception, des dispositifs pour former et mémoriser des fonctions de référence en relation avec la géométrie d'illumination de l'appareil radar, les intervalles de distance à mesurer, les plages d'angles de rotation, les impulsions d'émission ainsi que la hauteur de l'antenne rotative au-dessus du sol, et un corrélateur pour mettre les signaux de réception en corrélation avec les fonctions de référence, ainsi qu'un appareil d'évaluation et/ou d'indication pour le résultat de la corrélation, caractérisé par le fait qu'on utilise, pour la corrélation, exclusivement la partie principale du signal de réception ($S_E$), pour laquelle le changement de phase est inférieur ou égal à 90° correspondant à $\pi/2$ pour le trajet aller et le trajet retour du signal émis et reçu, et qu'on utilise, en tant que fonction de référence, une fonction fenêtre simplifiée ($S_r$;r) dont la largeur correspond également à la partie principale du signal de réception.

2. Appareil radar suivant la revendication 1, caractérisé par le fait que les composantes en phase et en quadrature ($I_r$, $Q_r$) de la fonction fenêtre sont choisis égales (K;1).

3. Appareil radar suivant la revendication 2, caractérisé par le fait que les composantes en phase et en quadrature ($I_r$, $Q_r$) sont respectivement une fonction échelon (r) avec une valeur normalisée (K) à l'intérieur des limites définies par la partie principale du signal de réception et avec la valeur O en dehors de ces limites.

4. Appareil radar suivant l'une des revendications précédentes, caractérisé par le fait qu'on effectue la corrélation à l'aide de la fonction fenêtre à l'intérieur d'un angle de rotation maximal ($\alpha_{nmax}$) répondant à la formule :

$$R_n(t) \leq R_{SOn} + \frac{\lambda}{8}$$

où n est le numéro de l'intervalle de distance respectif, $R_n(t)$ la distance de la cible, $R_{SOn}$ la distance entre l'antenne et la ligne médiane de la bande illuminée par l'antenne et $\lambda$ la longueur d'onde du signal d'émission; si la bande illuminée est subdivisée en N intervalles de distance, l'indice n donne le numéro de l'intervalle de distance respectif en fonction de la résolution radiale ($1 \leq n \leq N$).

5. Appareil radar suivant la revendication 4, caractérisé par le fait que l'angle de rotation maximal pour les différents intervalles de distance est défini par:

$$\alpha_{nmax} = \arccos\left[1 - \left(\frac{\sqrt{(R_{gn} - L)^2 + H_o^2}}{L \cdot R_{gn}} \cdot \frac{\lambda}{8} + \frac{\lambda^2}{128 \cdot L \cdot R_{gn}}\right)\right],$$

où $R_{gn}$ est la distance de l'axe de rotation de l'antenne par rapport au point milieu de l'intervalle de distance respectif avec l'indice n, L la longueur du bras rotatif portant portant l'antenne, $H_0$ la hauteur de l'antenne au-dessus du sol et $\lambda$ la longueur d'onde du signal d'émission.

6. Appareil radar suivant l'une des revendications précédentes, caractérisé par le fait qu'il est prévu un circuit de calcul et de détermination (44, 45) à l'aide duquel la zone dans laquelle a lieu la corrélation avec la fonction fenêtre simplifiée ($S_r(t)$) est subdivisée en sous-zones ($Z_s$, $\Delta\alpha$) et que le signal de réception est analysé aux points de référence déterminés par la subdivision et mis en corrélation avec la fonction fenêtre respective.

**7.** Appareil radar suivant la revendication 6, caractérisé par le fait que le circuit de calcul (44, 45) comprend un circuit de calcul de points d'appui (44) et un circuit de détermination d'incréments (45) dans lesquels sont déterminés le nombre ($Z_s$) et la position des points de référence auxquels sont formées les valeurs pour les fonctions fenêtre et sont analysés les signaux de réception.

**8.** Appareil radar suivant l'une des revendications précédentes, caractérisé par le fait que la fonction fenêtre simplifiée correspond à

$$r(t) = \begin{cases} K & \text{pour } -t_{max} \leq t \leq +t_{max} \\ O & \text{par ailleurs} \end{cases}$$

$\pm t_{max}$ étant le temps associé à l'angle de rotation admissible maximal $\alpha_{max}$.

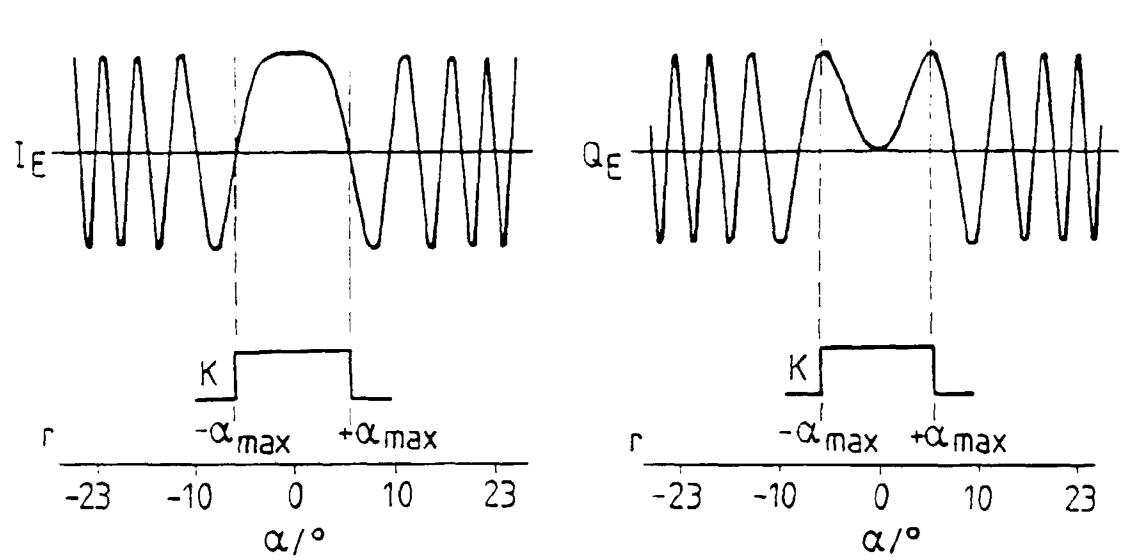
I_E
Q_E
K
K
r
r
-α max
+α max
-α max
+α max
-23
-10
0
10
23
-23
-10
0
10
23
α/°
α/°

FIG. 1

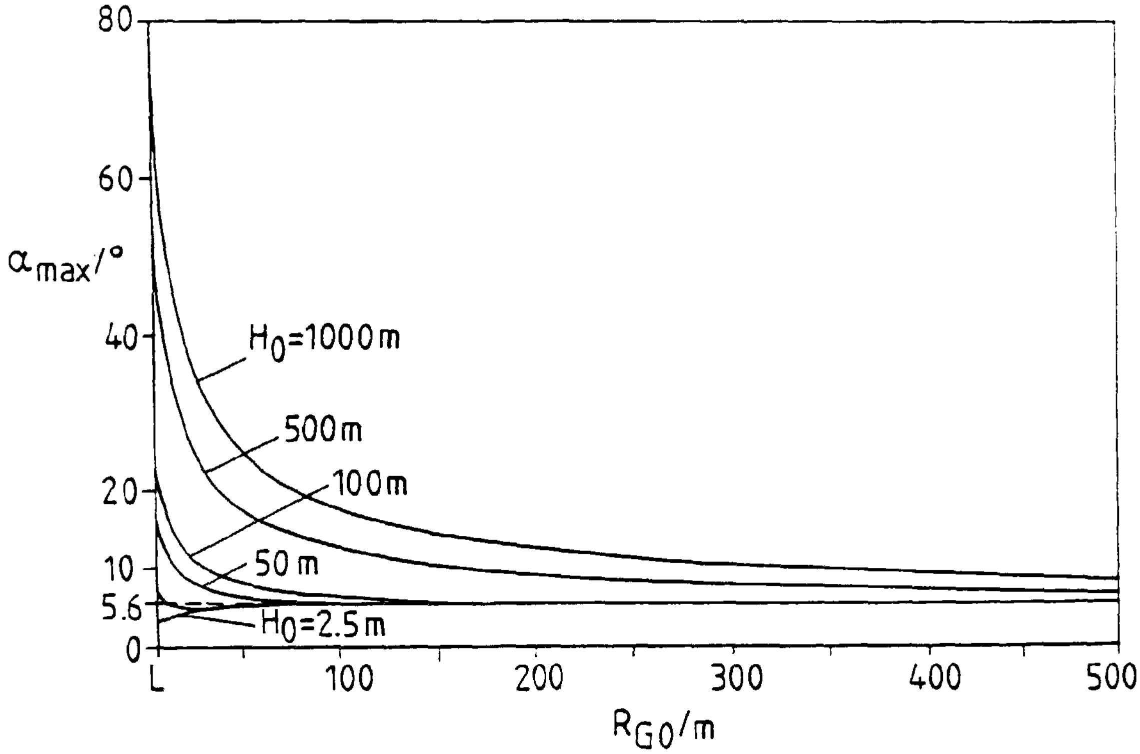
80
60
40
20
10
5.6
0
α max/°
H0=1000m
500m
100m
50 m
H0=2.5m
L
100
200
300
400
500
RG0/m

FIG. 2

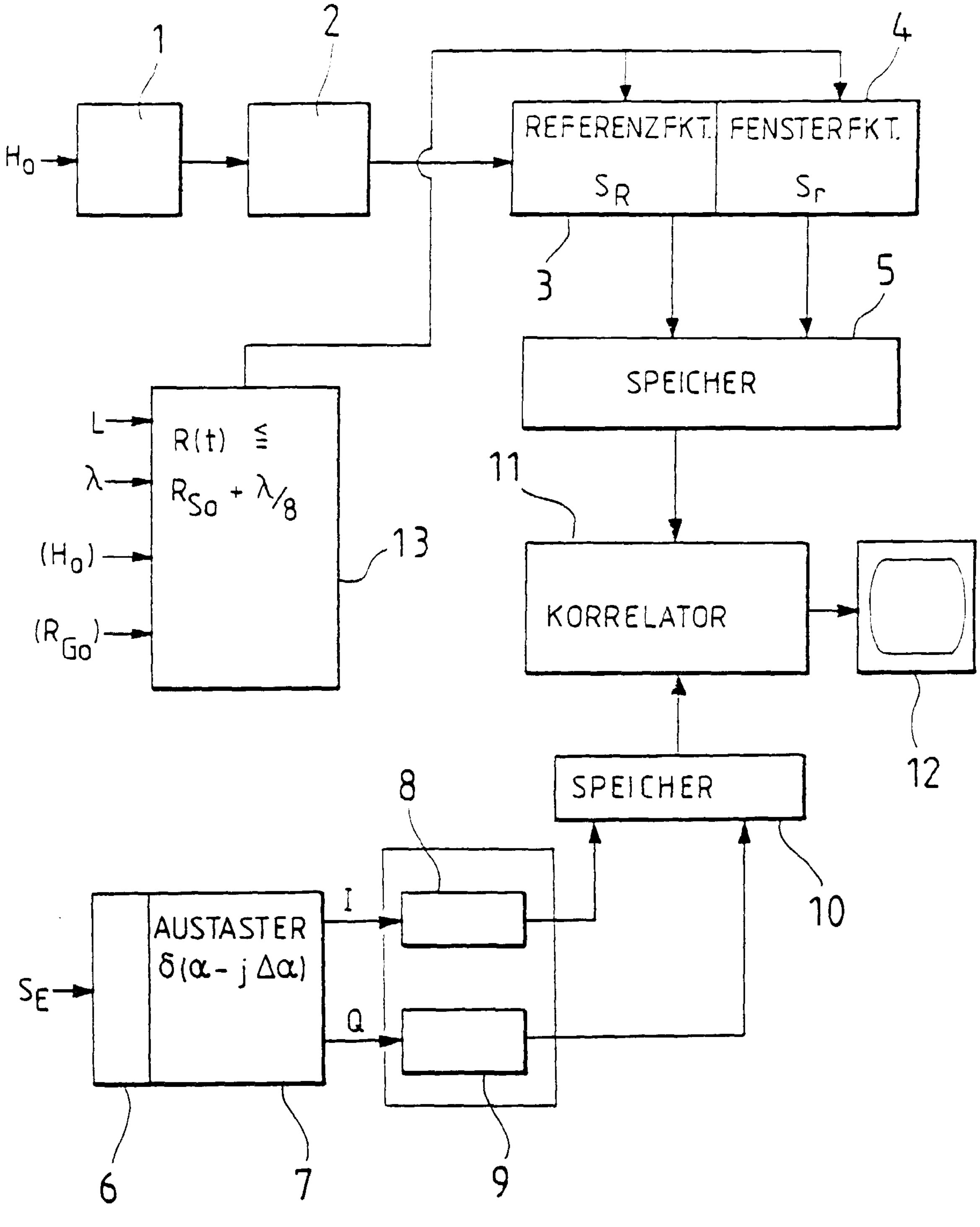
1
2
4
H0
REFERENZFKT.
SR
FENSTERFKT.
Sr
3
5
SPEICHER
L
λ
(H0)
(RGo)
R(t) ≦
RSo + λ/8
13
11
KORRELATOR
12
SPEICHER
8
10
I
Q
SE
AUSTASTER
δ(α - j Δα)
6
7
9

FIG. 4

FIG. 3

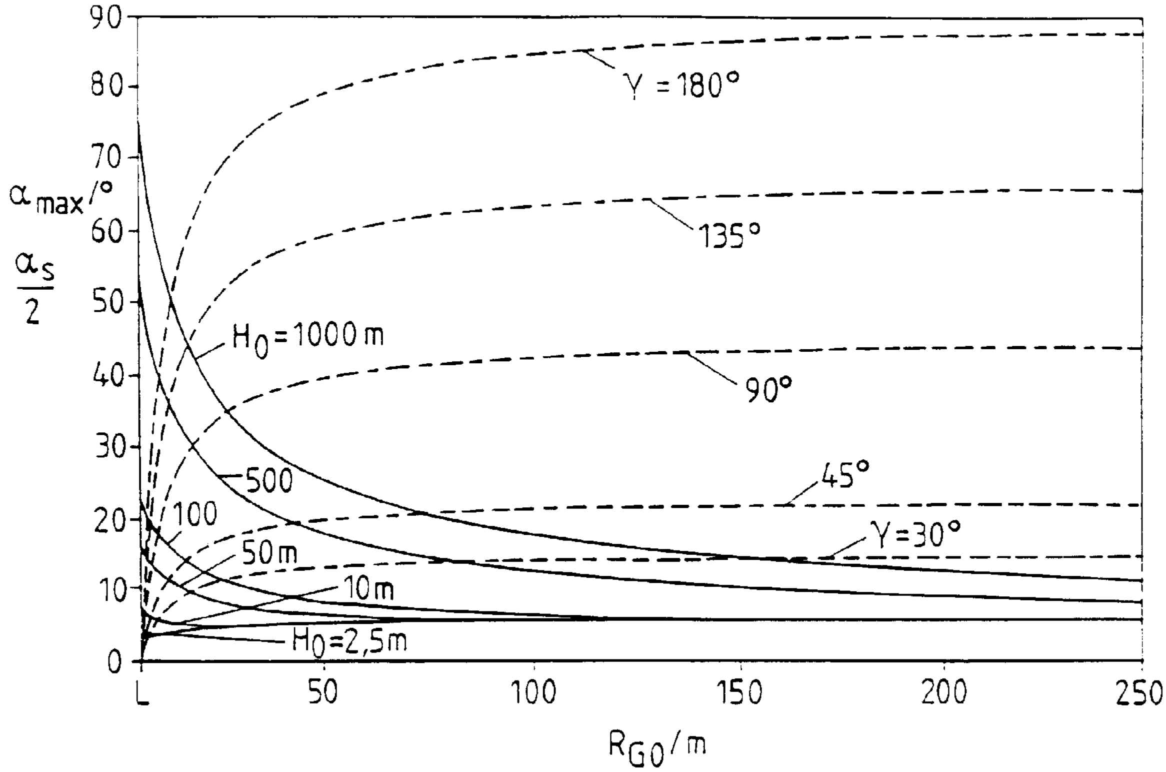
90
80
70
60
50
40
30
20
10
0
$\alpha_{max}$/°
$\frac{\alpha_s}{2}$
Y = 180°
135°
90°
45°
Y=30°
$H_0$=1000 m
500
100
50m
10m
$H_0$=2,5m
L
50
100
150
200
250
$R_{G0}$/m

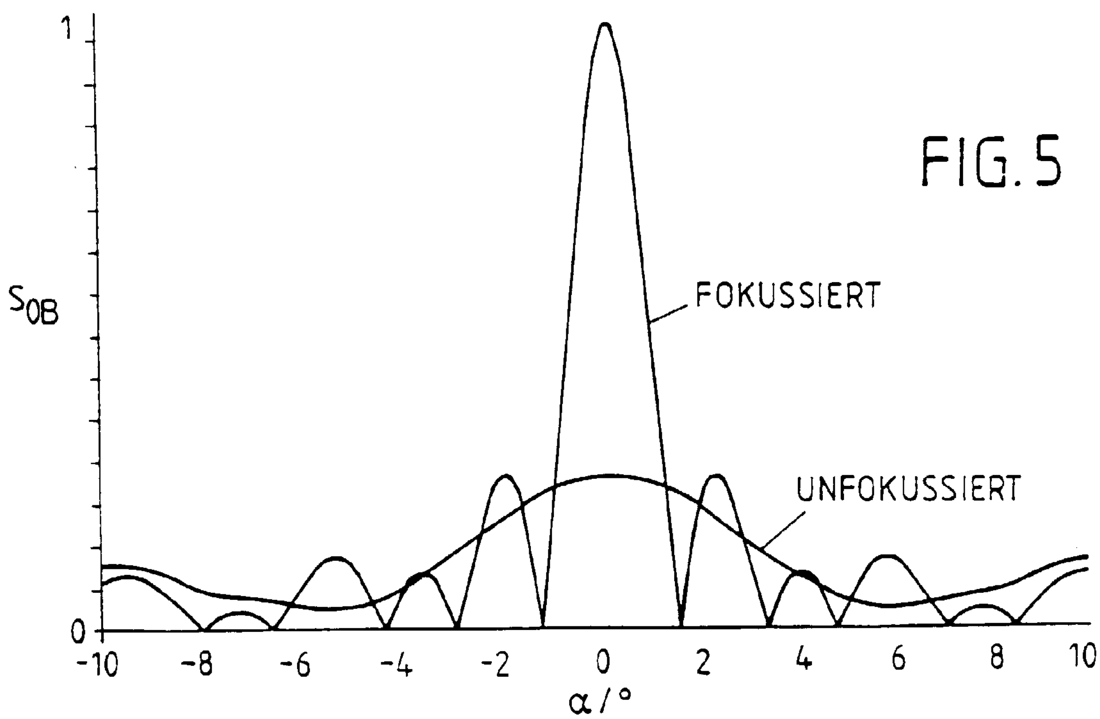
1
0
$S_{0B}$
FOKUSSIERT
UNFOKUSSIERT
-10
-8
-6
-4
-2
0
2
4
6
8
10
α / °

FIG. 5

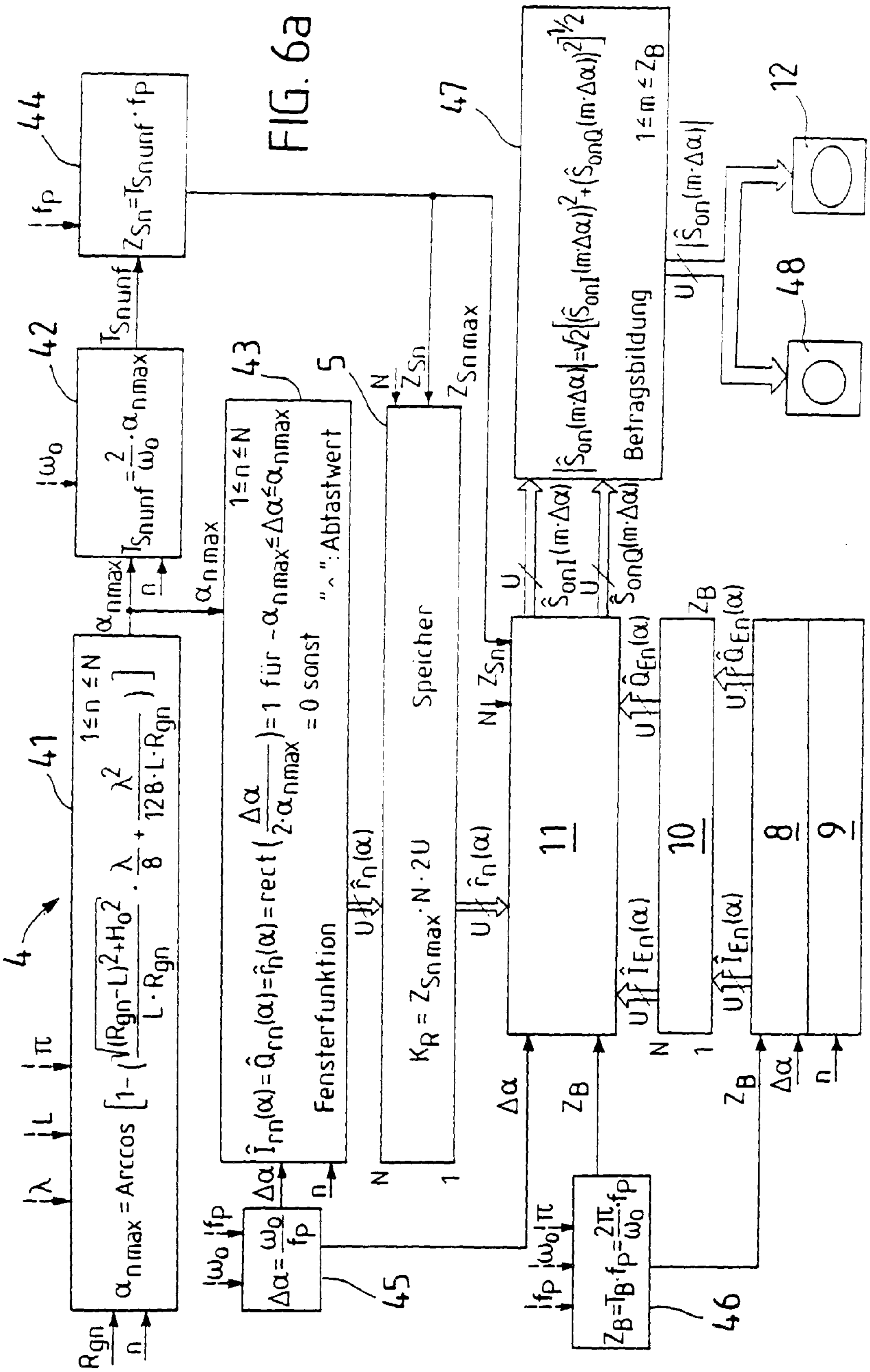
4
41
42
43
44
45
46
47
48
5
12
11
10
8
9
Speicher
Fensterfunktion
Betragsbildung
"^": Abtastwert
= 0 sonst
1 ≤ n ≤ N
1 ≤ m ≤ Z_B
Δα = ω_0 / f_P
Z_B = T_B · f_P = 2π / ω_0 · f_P
Z_Sn = T_Snunf · f_P
T_Snunf = 2 / ω_0 · α_nmax
K_R = Z_Snmax · N · 2U

FIG. 6a

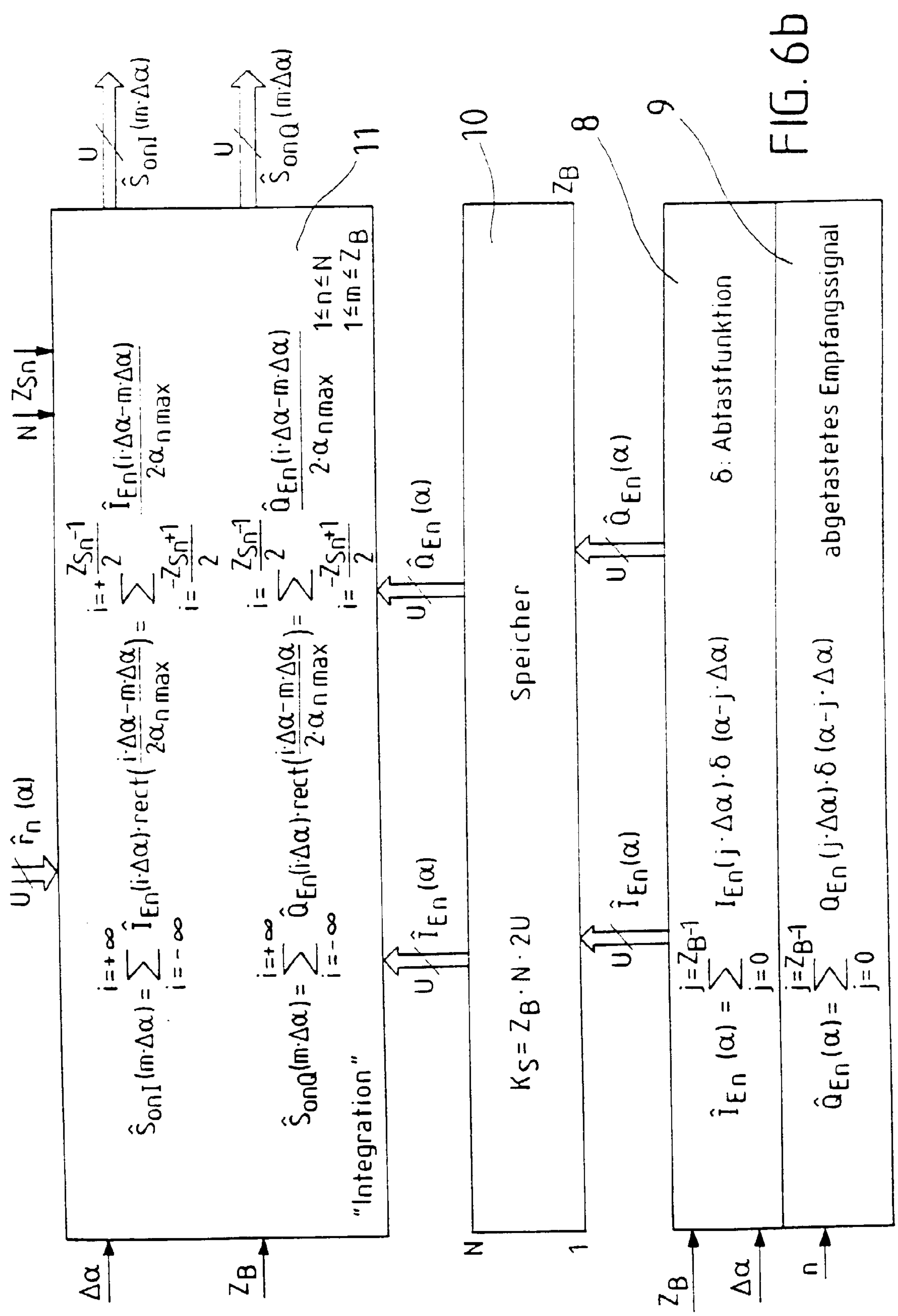

"Integration"
Speicher
$K_S = Z_B \cdot N \cdot 2U$
δ: Abtastfunktion
abgetastetes Empfangssignal
11
10
8
9


FIG. 6b